(19) Europäisches Patentamt / European Patent Office / Office européen des brevets

(11) **EP 3 713 196 B1**

(12) **EUROPEAN PATENT SPECIFICATION**

(45) Date of publication and mention of the grant of the patent:
**17.06.2026 Bulletin 2026/25**

(21) Application number: **19163718.0**

(22) Date of filing: **19.03.2019**

(51) International Patent Classification (IPC):
*H04L 67/10* (2022.01)      *H04L 67/12* (2022.01)
*H04W 4/70* (2018.01)       *H04L 9/32* (2006.01)
*H04L 9/00* (2022.01)       *H04W 12/108* (2021.01)
*H04W 12/48* (2021.01)

(52) Cooperative Patent Classification (CPC):
**H04L 67/10; H04L 9/3239; H04L 9/3247; H04L 9/50; H04L 67/12; H04W 4/70; H04W 12/108; H04W 12/48;** H04L 2209/805

(54) **METHOD AND APPARATUSES FOR BINDING AN EDGE COMPUTING DEVICE TO A COMMUNICATION TERMINAL FOR PRE-PROCESSING DATA**

VERFAHREN UND VORRICHTUNGEN ZUR BINDUNG EINER KANTENBERECHNUNGSVORRICHTUNG AN EIN KOMMUNIKATIONSENDGERÄT ZUR DATENVORVERARBEITUNG

MÉTHODE ET APPAREILS POUR RELIER UN DISPOSITIF INFORMATIQUE DE BORD À UN TERMINAL DE COMMUNICATION POUR PRÉTRAITER DES DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2020 Bulletin 2020/39**

(73) Proprietors:
• **Deutsche Telekom AG**
  **53113 Bonn (DE)**
• **Giesecke+Devrient Mobile Security Germany GmbH**
  **81677 München (DE)**

(72) Inventors:
• **SCHNIEDERS, Dominik**
  **52078 Aachen (DE)**
• **SPITZ, Stephan**
  **85757 Karlsfeld (DE)**

(74) Representative: **karo IP**
**Patentanwälte PartG mbB**
**Steinstraße 16-18**
**40212 Düsseldorf (DE)**

(56) References cited:
• **ULLAH REHMAT ET AL: "Information-Centric Networking With Edge Computing for IoT: Research Challenges and Future Directions", IEEE ACCESS, vol. 6, 17 December 2018 (2018-12-17), pages 73465 - 73488, XP011701492, DOI: 10.1109/ACCESS.2018.2884536**
• **JIANLI PAN ET AL: "EdgeChain: An Edge-IoT Framework and Prototype Based on Blockchain and Smart Contracts", ARXIV.ORG, CORNELL UNIVERSITY LIBRARY, 201 OLIN LIBRARY CORNELL UNIVERSITY ITHACA, NY 14853, 16 June 2018 (2018-06-16), XP080891315**

**Description**

TECHNICAL FIELD

The disclosure relates to techniques for binding an Edge computing device to a communication terminal, in particular an Internet-of-Things terminal, for pre-processing data before transmission to a core network, in particular a 5G core network. The binding is based on electronic identities of the communication terminal, the Edge computing device and an Edge service running on the Edge computing device, in order to provide a unique identification for the pre-processed data.

BACKGROUND

Large amounts of IoT data cannot be processed in the core network or a downstream data unit. Typically, preprocessing occurs in a combination of IoT endpoint and computing edge in or close to the RAN (Radio Access Network), in particular in 5G networks using virtualized network functions. In other 5G applications, such as time-critical "low-latency" applications, pre-processing in conjunction with an edge service is necessary for speed reasons.

Edge Computing enables server-based applications to be brought "closer" to the user equipment (UE) and thus obtain lower latency in the "round trip time" (RTT). In particular, mobile network operators (MNOs) are making efforts to integrate edge computing into their networks. Due to the low latency, it is possible that complex calculations can be executed in an Edge service (instead of the UE) while still realizing "real-time critical" or "near real-time critical" functionalities.

The IEEE-Articles "Information-centric networking with edge computing for IoT: Research challenges and future directions" by Ketan Bhardwaj et al., and "EdgeChain: An Edge-IoT Framework and Prototype Based on Blockchain and Smart Contracts" by Ullah Rehmat et al. represent prior art relating to Edge Computing for IoT.

Currently, the endpoint-edge combination (i.e. UE connected to Edge computing device) provides pre-processed data that is not traceable to a specific combination of device, edge computer and edge service, i.e. no proof of the data origin can be ensured and no revision security for critical systems can be guaranteed. That means, current endpoint-edge combinations are prone to security issues, especially the lack of a trustworthy computing platform and data integrity and origin of the processed information cannot be guaranteed.

SUMMARY OF THE INVENTION

It is the object of the present invention to provide a concept to solve the above-mentioned problems, in particular to provide a solution for providing an endpoint-edge combination that is traceable to a specific combination of device, edge computer and edge service, in order to ensure proof of the data origin in conjunction with the identities involved in processing the data and to have revision security for critical systems, in particular for 5G applications, such as time-critical "low-latency" applications.

The foregoing and other objects are achieved by the subject matter of the independent claims. Further implementation forms are apparent from the dependent claims, the description and the figures.

The disclosure is based on a novel security concept enabling traceability of pre-processed data from the endpoint-edge combination to a specific combination of device, edge computer and edge service. This novel security concept allows to ensure proof of the data origin and to have revision security for critical systems. Integrity assurance of the data can be performed even with very small LPWA (Low Power Wide Area) IoT (Internet-of-Things) endpoints. In this case, the hash value is computed by the Edge Cloudlet (i.e. Edge computing device) for each IoT endpoint record. This can even be achieved if a data endpoint is combined with changing edge services, e.g. in a scenario where the IoT endpoint is mobile (Track & Trace) or autonomous driving with time-critical control signals.

The novel security concept can be implemented, for example, by applying the three steps as described in the following.

Step 1: Making a "binding" between the terminal device and the edge computer.

Both the terminal device, the edge computer (Cloudlet) and the processing edge service have an electronic identity, e.g. via a certificate with a public key and a secured associated private key.

This electronic identity allows the units to be combined with the processed data at regular time intervals. This can be done through a hash value with signature on the processed data and identities, e.g. as follows:

A)

$$H_{Data} = Hash[I/O\text{-}Data];$$

B)

$$\text{System-Hash} = H_{System} = Hash[Certifikate_{Endpoint}, Certificate_{Edge-Service},$$

$$Certificate_{Cloudlet}, H_{Data}];$$

C)

Integrity-Binding = $(H_{System})$signed by endpoint + $(H_{System})$signed by Edge-Service, $(H_{System})$signed by Cloudlet.

This merge may also take place temporarily and with different edge services and cloudlets, e.g. when the terminal device is mobile.

Step 2: Securing a "fingerprint" of the processing data in a blockchain

The value System-Hash and the "Integrity Binding" value or also "just" a hash value thereof "Hash[Integrity Binding]" can be stored in a blockchain together with a time stamp:
System-Hash x, Integrity-Binding x, timestamp 1, hash pointer;
or:
System-Hash x, Hash[Integrity-Binding x], timestamp 1, hash pointer.

Step 3: Verification of the data origin

In the last step, decoupled from 1st and 2nd steps, evidence is provided that the data stored in the blockchain was actually created by the combination of terminal device, edge computer (cloudlet), and processing edge service. The following sub-steps A), B) and C) are performed:

A) In the first sub-step, the System-Hash and the value "Integrity-Binding" are read from the blockchain. The properties of the blockchain ensure that these values are trusted and stored there at a specific time.

B) Then, in a further sub-step, the hash value is generated again from the present original data: $H_{Data} = Hash[I/O-Data]$. If the original data is no longer available, a new generation of the System-Hash from $H_{Data}$ is sufficient: $H_{System} = Hash[Certificate_{Endpoint}, Certificate_{Edge-Service}, Certificate_{Cloudlet}, H_{Data}]$.

C) Now, in a further sub-step the individual signatures can be compared with the public keys from the certificates, i.e.:

[ $(H_{System})$signed by Endpoint] encoded by $PubKey_{Endpoint} = H_{System}$
[ $(H_{System})$signed by Edge-Service] encoded by $PubKey_{Edge-Service} = H_{System}$
[ $(H_{System})$signed by Cloudlet] encoded by $PubKey_{Cloudlet} = H_{System}$

If the values are the same, it can be guaranteed that the data are I/O data from the combination of terminal, edge computer (Cloudlet) and edge service and have been processed at the time stored in the blockchain.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a core network. The term core network or communication system refers to the technical infrastructure on which the transmission of signals takes place. The core network essentially comprises the switching network in which the transmission and switching of the signals takes place between the stationary devices and platforms of the mobile radio network or fixed network, and the access network in which the transmission of the signals takes place between a network access device and the communication terminal. The core network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal or user equipment as described above, for example, a mobile phone or a mobile device with mobile adapter or a machine terminal.

According to a first aspect the invention relates to a communication assembly for pre-processing data before transmission to a core network, in particular a 5G core network, the communication assembly, comprising: a communication terminal, in particular an Internet-of-Things, IoT, terminal for providing data, the communication terminal comprising an electronic identity; an Edge computing device providing network-related processing resources at an edge of the core network, the Edge computing device running at least one Edge service configured to pre-process data on the network-related processing resources, wherein each, the Edge computing device and the at least one Edge service comprises an electronic identity; and a binding channel between the communication terminal and the at least one Edge service, configured to bind the at least one Edge service at least temporarily to the communication terminal for pre-processing the data provided by the communication terminal, wherein the binding is based on the electronic identities of the communication terminal, the Edge computing device and the at least one Edge service.

Such a communication assembly provides an endpoint-edge combination that is traceable to a specific combination of device, edge computer and edge service. It thus ensures proof of the data origin in conjunction with the identities involved in processing the data and provides revision security for critical systems, in particular for 5G applications, such as time-critical "low-latency" applications.

In particular, the communication assembly enables traceability of pre-processed data from the endpoint-edge combination to a specific combination of device, edge computer and edge service. Integrity assurance of the data can be performed even with very small LPWA (Low Power Wide Area) IoT (Internet-of-Things) endpoints. This can even be achieved if a data endpoint is combined with changing edge services, e.g. in a scenario where the IoT endpoint is mobile (Track & Trace) or autonomous driving with time-critical control signals.

In an exemplary implementation form of the communication assembly, the Edge computing device is configured to determine an electronic identity of a specific device based on a cryptographic unique root-of-trust located in the specific device and to establish the binding channel based on the electronic identity of the specific device and corresponding electronic identities of the communication terminal, the Edge computing device and at least one Edge service.

This provides the advantage that based on the cryptographic unique root-of-trust, the Edge computing device is able to verify the code running on the communication terminal, the edge computing device as well as on the computing platforms of the Edge device that offer the Edge services. The Edge computing device assembly may further establish their trustworthiness to other devices, and securely connect to other devices on or off the core network.

In an exemplary implementation form of the communication assembly, the cryptographic unique root-of-trust of the Edge computing device, the Edge service and the communication terminal is for each component an electronic fingerprint, $H_{DATA}$, in particular a hash value, of unique data and code located on the specific device.

Such a hash value can be efficiently computed and provides a high degree of security. Typical algorithms for this purpose are a HMAC, which uses in addition a symmetric key for hash calculation, or SHA1 or SHA256, which are signed by a private key after hash calculation.

In an exemplary implementation form of the communication assembly, the cryptographic unique root-of-trust of the Edge computing device, the Edge service and the communication terminal is formed by an electronic certificate comprising a public key and a corresponding secure private key.

Such a communication assembly provides effective security, as it only requires keeping the private key private; the public key can be openly distributed without compromising security.

In an exemplary implementation form of the communication assembly, the Edge computing device, the Edge service and/or the communication terminal is configured to determine the electronic fingerprint, $H_{DATA}$, of the data in regular time intervals and to establish the binding channel for a respective time interval.

This provides the advantage that security can be improved, since each time interval another electronic fingerprint will be used.

In an exemplary implementation form of the communication assembly, the Edge computing device is configured to determine an aggregated electronic fingerprint, $H_{SYSTEM}$, which comprises electronic fingerprints, $H_{DATA}$, of one or more Edge services executed on the Edge computing device.

Such an aggregated electronic fingerprint increases security as it depends on multiple electronic fingerprints of the involved devices and/or services.

In an exemplary implementation form of the communication assembly, the Edge computing device is configured to provide an integrity binding value based on signatures of the aggregated electronic fingerprint, $H_{SYSTEM}$, of the communication assembly created by the communication terminal, the Edge computing device and the at least one Edge service.

Such integrity binding value ensures that the pre-processed data originates from the respective components integrated by the binding channel and secured by the respective signatures.

In an exemplary implementation form of the communication assembly, the Edge computing device is configured to store the aggregated electronic fingerprint, $H_{SYSTEM}$, of the communication assembly, the integrity binding value and/or an electronic fingerprint, in particular a hash value, of the integrity binding value together with a time stamp in a database, in particular a distributed database, in particular a blockchain.

This provides the advantage that such a distributed database or blockchain is resistant to modification of the data. It can record transactions between two parties efficiently and in a verifiable and permanent way.

In an exemplary implementation form of the communication assembly, the distributed database comprises several blocks, each containing an entry of an aggregated electronic fingerprint, $H_{SYSTEM}$, of the communication assembly, an integrity binding value, a corresponding time stamp and a hash pointer to a previous block containing a similar structure.

By design, such a distributed database, e.g. a blockchain, is resistant to modification of the data. It may form an open, distributed ledger that can record transactions between two parties efficiently and in a verifiable and permanent way.

In an exemplary implementation form of the communication assembly, the Edge computing device is configured to create the binding channel dynamically between different Edge services of the Edge computing device based on an indication from the communication device.

This provides the advantage that the communication device can dynamically change or switch between different services.

In an exemplary implementation form of the communication assembly, the Edge computing device is configured to release the binding channel between the communication terminal and the at least one Edge service based on a handover signal from a second Edge computing device indicating establishment of a second binding channel between the communication terminal and the second Edge computing device.

This provides the advantage that mobile devices can connect with different Edge computing devices based on their corresponding location. Depending on their geographical location, the closest Edge computing device can be selected, for example.

In an exemplary implementation form of the communication assembly, the binding channel comprises a radio channel established between a mobile communication terminal, in particular an IoT device, and an Edge computing device located in a radio access network of the 5G network.

This provides the advantage that the binding is no fixed binding but rather a flexible binding, where the mobile communication device can move.

According to a second aspect, the invention relates to a network entity for verifying an integrity of pre-processed data of a communication assembly comprising a communication terminal, an Edge computing device and at least one Edge service, wherein the network entity is configured to: derive a first aggregated electronic fingerprint, $H_{SYSTEM}$, of the communication assembly from a data base entry; determine a second aggregated electronic fingerprint, $H_{SYSTEM}$, of the communication assembly based on original data or based on an electronic fingerprint, $H_{DATA}$, of the original data and electronic certificates of the communication terminal, the Edge computing device and the at least one Edge service; verify the integrity of the pre-processed data, the involved Edge computing device and/or the involved at least one Edge service based on a comparison of the first aggregated electronic fingerprint with the second aggregated electronic fingerprint.

Such a network device can implement the traceability of a specific combination of device, edge computer and edge service. The network device thus ensures proof of the data origin in conjunction with the identities involved in processing the data and provides revision security for critical systems, in particular for 5G applications, such as time-critical "low-latency" applications. The network device can be flexible arranged within the core network or outside the core network, e.g. in the Edge Device or even within another network.

In an exemplary implementation form of the network entity, the network entity is configured to derive the first aggregated electronic fingerprint, $H_{SYSTEM}$, of the communication assembly from a blockchain.

By design such a blockchain is resistant to modification of the data. It may form an open, distributed ledger that can record transactions between two parties efficiently and in a verifiable and permanent way. Thus, the network device can provide reliable results and ensure security of the verified data.

In an exemplary implementation form of the network entity, the network entity is configured to verify the pre-processed data based on a comparison of the first aggregated electronic fingerprint with the second aggregated electronic fingerprint signed by each of the communication terminal, the Edge computing device and the at least one Edge service using their respective public key.

Such a network device provides effective security, as it only requires keeping the private key private; the public key can be openly distributed without compromising security.

According to a third aspect, the invention relates to a method for pre-processing data by a communication assembly comprising a communication terminal, an Edge computing device running at least one Edge service and a binding channel between the communication terminal and the at least one Edge service, wherein each of the communication terminal, the Edge computing device and the at least one Edge service comprises an electronic identity, the method comprising: providing data by the communication terminal; and binding the at least one Edge service at least temporarily to the communication terminal, by the binding channel, for pre-processing the data provided by the communication terminal, wherein the binding is based on the electronic identities of the communication terminal, the Edge computing device and the at least one Edge service.

Such a method provides traceability of an endpoint-edge combination with respect to a specific combination of device, edge computer and edge service. The method ensures proof of the data origin in conjunction with the identities involved in processing the data and provides revision security for critical systems, in particular for 5G applications, such as time-critical "low-latency" applications.

According to a fourth aspect the invention relates to a computer program product comprising program code for performing the method according to the third aspect of the invention, when executed on a computer or a processor.

Embodiments of the invention can be implemented in hardware and/or software.

## BRIEF DESCRIPTION OF THE DRAWINGS

Further embodiments of the invention will be described with respect to the following figures, wherein:

Fig. 1 shows a schematic diagram illustrating an exemplary communication assembly with communication terminal 120, Edge services 114, 116 on Edge computing device 110 and binding channel 112 according to the disclosure;

Fig. 2 shows a schematic diagram illustrating an exemplary system 200 for providing integrity values according to the disclosure;

Fig. 3 shows a schematic diagram illustrating an exemplary storage of integrity values in a blockchain 300 according to the disclosure; and

Fig. 4 shows a schematic diagram illustrating a method 400 for pre-processing data by a communication assembly according to the disclosure.

## DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following section, edge computing nodes and edge computing devices are described. Edge computing is a distributed computing paradigm in which computation is largely or completely performed on distributed device nodes known as smart devices or edge devices as opposed to primarily taking place in a centralized cloud environment. The eponymous "edge" refers to the geographic distribution of computing nodes in the network as Internet of Things devices, which are at the "edge" of an enterprise, metropolitan or other network. The motivation is to provide server resources, data analysis and artificial intelligence ("ambient intelligence") closer to data collection sources and cyber-physical systems such as smart sensors and actuators. Edge computing is seen as important in the realization of physical computing, smart cities, ubiquitous computing and the Internet of Things.

Edge computing pushes applications, data and computing power (services) away from centralized points to the logical extremes of a network. Edge computing takes advantage of microservices architectures to allow some portion of applications to be moved to the edge of the network. Edge Computing moves fragments of application logic out to the edge. As a technological paradigm, edge computing may be architecturally organized as peer-to-peer computing, autonomic (self-healing) computing, grid computing, and by other names implying non-centralized availability.

In the following, network devices and network entities are described such as network access entities and core network entities. The network access entity enables access and mobility management in the core network. Via the network access entity, communication terminals with their identity (UE ID) can register in the core network and receive the permission to set up a communication connection. For example, in the 5G core network, the network access entity may be an AMF (Access and Mobility Management Function) representing the access and mobility management function. This manages the access and mobility control. The AMF may also include network slice selection functionality. For wireless access, mobility management is not needed. The network access entity may be, for example, an MME (mobility management entity) in the 4G core network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

EP 3 713 196 B1

The radio access network (RAN) is part of a mobile communication system. It implements a radio access technology (RAT). Conceptually, it resides between a communication terminal or communication device such as a mobile phone, a computer, or any remotely controlled machine and provides connection with its core network (CN). Depending on the standard, mobile phones and other wireless connected terminals or devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN. The RAN entity can for example include a base station, e.g. a NodeB or and eNodeB or a 5G capable radio cell.

The network access entity further provides the technical function of first establishing a security relationship with a previously unknown security device, in order to then be able to install security elements (keys) in the terminal or device itself and in the network application function (NAF) of the network access function. For example, the Diameter and Hypertext Transfer Protocol (http) protocols can be used.

Involved in the maintenance of such a generic security relationship are the following functional elements: communication terminal, e.g. a mobile phone, i.e. User Equipment (UE), which wants to use a particular service, application server that provides the service, e.g. for Mobile TV, VoLTE, VoIP, FTP data transfer, media streaming, Internet browsing, etc., Network Application Function (NAF), the network access entity itself, which establishes a security relationship between UE and NAF and a database of the home network, e.g. HSS Home Subscriber Server (HSS) or UDR, unified data repository of the (mobile) network provider, which manages the respective user-specific profiles of its terminal users.

The network access entity network access feature is consulted by the application server (NAF) after a terminal has requested service access from it. Since the application server does not yet know the terminal at this time, it first refers this to the network access function. The terminal and the network access function now authenticate to each other; this can be done, for example, by means of the AKA protocol (Authentication and Key Agreement) and by inquiring the network access function to the Home Subscriber Server (HSS) or the UDR database of the home network. Subsequently, the network access function and the terminal (UE) agree on a session key to be used for encrypted data exchange with the application server (NAF). If the terminal now again turns to the application server, it can obtain both the session key and subscriber-specific data from the network access function and start the data exchange with the terminal (UE). The appropriate session keys are used for cryptographic protection.

The Root of Trust (RoT) as described in this disclosure is a set of functions in the trusted computing module that is always trusted by the computer's operating system (OS). The RoT serves as separate compute engine controlling the trusted computing platform cryptographic processor on the PC, network device or mobile device it is embedded in. The RoT provides the functionality behind trusted computing features including: On the fly drive encryption; Detection and reporting of unauthorized changes to the operating system or programs; Detection of rootkits; Memory curtaining to prevent programs from inappropriately reading from or writing to another program's memory; Hardware-based digital rights management (DRM) support.

A signature or digital signature as described in this disclosure is a mathematical scheme for presenting the authenticity of digital messages or documents. A valid digital signature gives a recipient reason to believe that the message was created by a known sender (authentication), that the sender cannot deny having sent the message (non-repudiation), and that the message was not altered in transit (integrity). Digital signatures are a standard element of most cryptographic protocol suites, and are commonly used for software distribution, financial transactions, contract management software, and in other cases where it is important to detect forgery or tampering.

A hash function as described in this disclosure is any function that can be used to map data of arbitrary size to data of a fixed size. The values returned by a hash function are called hash values, hash codes, digests, or simply hashes. A cryptographic hash function as described in this disclosure allows one to easily verify that some input data maps to a given hash value, but if the input data is unknown, it is deliberately difficult to reconstruct it (or any equivalent alternatives) by knowing the stored hash value. This is used for assuring integrity of transmitted data and is the building block for message authentication.

A blockchain, as described in this disclosure, is a growing list of records, called *blocks,* which are linked using cryptography. Each block contains a cryptographic hash of the previous block, a timestamp, and transaction data (generally represented as a merkle tree root hash). By design, a blockchain is resistant to modification of the data. It is an open, distributed ledger that can record transactions between two parties efficiently and in a verifiable and permanent way. For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. Although blockchain records are not unalterable, blockchains may be considered secure by design and exemplify a distributed computing system with high Byzantine fault tolerance.

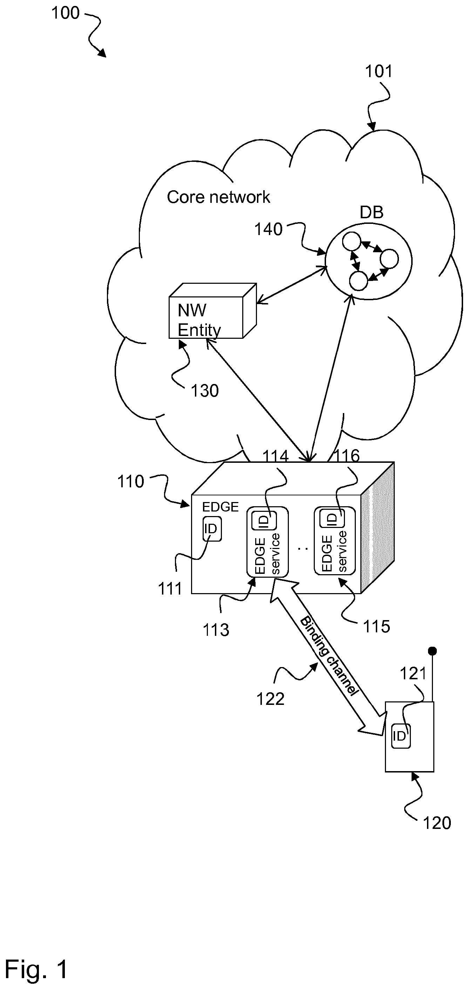

Fig. 1 shows a schematic diagram illustrating an exemplary communication assembly with communication

7

terminal 120, Edge services 113, 115 on Edge computing device 110 and binding channel 112 according to the disclosure. The communication assembly is configured to pre-process data before transmission to a core network 101, e.g. a 5G core network. The communication assembly 100 includes a communication terminal 120, e.g. an Internet-of-Things (IoT) terminal for providing data, and Edge computing device 110 and a binding channel 122.

The communication terminal 120 comprises an electronic identity 121, e.g. stored on a Subscriber Identity Module (SIM) of the terminal 120. The Edge computing device 110 provides network-related processing resources at an edge of the core network 101. The Edge computing device 110 runs at least one Edge service 113, 115 configured to pre-process data on the network-related processing resources. Each, the Edge computing device 110 and the at least one Edge service 113, 115 comprises an electronic identity 111, 114, 116. The binding channel 122 is established between the communication terminal 120 and the at least one Edge service 113, 115, for example a first Edge service 113 as shown in Fig. 1. The binding channel 122 is configured to bind the at least one Edge service 113, 115 at least temporarily to the communication terminal 120 for pre-processing the data provided by the communication terminal 120. The binding is based on the electronic identities 121, 111, 114, 116 of the communication terminal 120, the Edge computing device 110 and the at least one Edge service 113, 115.

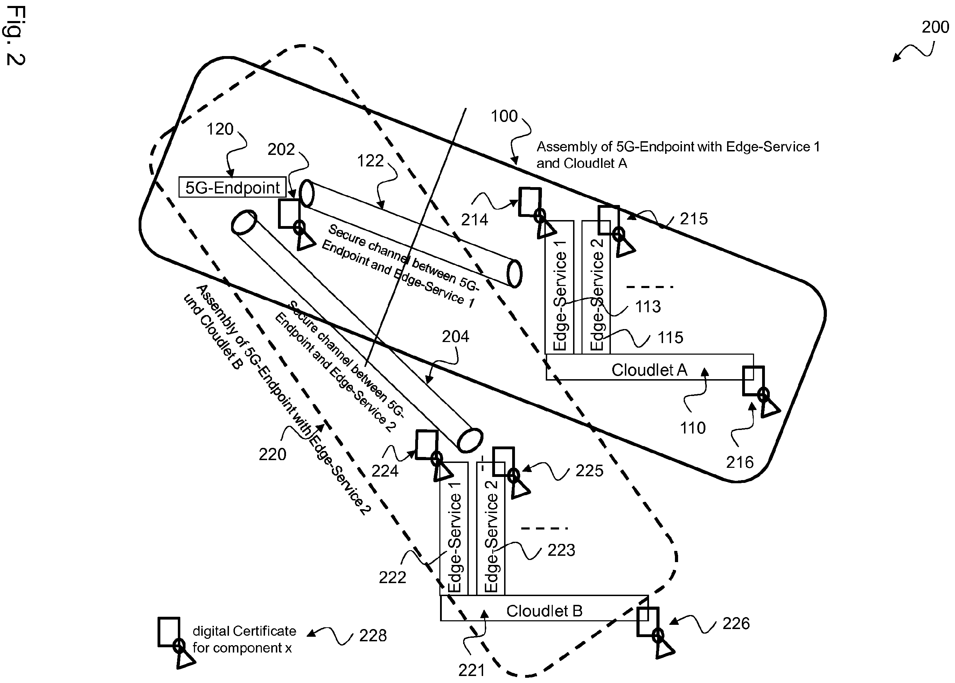

The Edge computing device 110 may be configured to determine an electronic identity 121, 111, 114, 116 of a specific device based on a cryptographic unique root-of-trust located in the specific device and to establish the binding channel 122 based on the electronic identity of the specific device and corresponding electronic identities 121, 111, 114, 116 of the communication terminal 120, the Edge computing device 110 and at least one Edge service 113, 115. The cryptographic unique root-of-trust may be formed by a digital certificate 202, 216, 214, 215 as described below with respect to Fig. 2. The specific device may be each of the communication terminal 120, the Edge computing device 110 and the Edge service 113, 115, i.e. a processing resource of the Edge computing device running the corresponding Edge service 113, 115.

The Root-of-Trust (RoT) is a set of functions in the trusted computing module that is always trusted by the computer's operating system (OS). The RoT serves as separate compute engine controlling the trusted computing platform cryptographic processor on the computing device or mobile device it is embedded in. The RoT is a cryptographic unique function or set of functions.

The cryptographic unique root-of-trust 202, 216, 214, 215 of the Edge computing device 110, the Edge service 113, 115 and the communication terminal 120 is for each component an electronic fingerprint, $H_{DATA}$, in particular a hash value, of unique data and code located on the specific device.

The cryptographic unique root-of-trust 202, 216, 214, 215 of the Edge computing device 110, the at least one Edge service 113, 115 and the communication terminal 110 is formed by an electronic certificate 228 comprising a public key and a corresponding secure private key.

The Edge computing device 110, the at least one Edge service 113, 115 and/or the communication terminal 110 may be configured to determine the electronic fingerprint, $H_{DATA}$, of the data in regular time intervals and to establish the binding channel 122 for a respective time interval.

The Edge computing device 110 may determine an aggregated electronic fingerprint, $H_{SYSTEM}$, which comprises electronic fingerprints, $H_{DATA}$, of one or more Edge services 113, 115 executed on the Edge computing device 110.

In the following, the term "aggregated electronic fingerprint" is used to differentiate the electronic fingerprint, $H_{DATA}$, that is derived based on data and code on a specific device from the electronic fingerprint, $H_{SYSTEM}$, that is derived based on other electronic fingerprints, e.g. electronic fingerprint, $H_{DATA}$, derived based on data and code. Preferably, electronic fingerprints are derived from hash values or are hash values.

The Edge computing device 110 may provide an integrity binding value based on signatures of the aggregated electronic fingerprint, $H_{SYSTEM}$, of the communication assembly 100 created by the communication terminal 120, the Edge computing device 110 and the at least one Edge service 113, 115.

The establishing of the binding channel 122 may be performed by the following procedure implemented on the terminal device and the edge computer. Both the terminal device 120, the edge computing device 110 (also referred to as "Cloudlet") and the processing edge service 113, 115 have an electronic identity 121, 111, 114, 116, e.g. via a certificate with a public key and a secured associated private key, e.g. a certificate 202, 216, 214, 215 as described below with respect to Fig. 2.

This electronic identity 121, 111, 114, 116 allows the units 120, 110, 113, 115 to be combined with the processed data at regular time intervals. This can be done through a hash value with signature on the processed data and identities, e.g. as described by the following example:

A)

$$H_{Data} = Hash[I/O\text{-}Data];$$

B)

$$\text{System-Hash} = H_{System} = \text{Hash}[\text{Certifikate}_{Endpoint}, \text{Certificate}_{Edge\text{-}Service},$$

$$\text{Certificate}_{Cloudlet}, H_{Data}];$$

C)

$$\text{Integrity-Binding} = (H_{System})\text{signed by endpoint} + (H_{System})\text{signed by Edge-Service}, (H_{System})\text{signed by Cloudlet}.$$

In this example, $H_{Data}$ is denoted as electronic fingerprint while $H_{System}$ describes the aggregated electronic fingerprint or the System-Hash. The Integrity-Binding value is based on the aggregated electronic fingerprints.

This merge may also take place temporarily and with different edge services 113, 115 and cloudlets 110, 221, e.g. when the terminal device 120 is mobile.

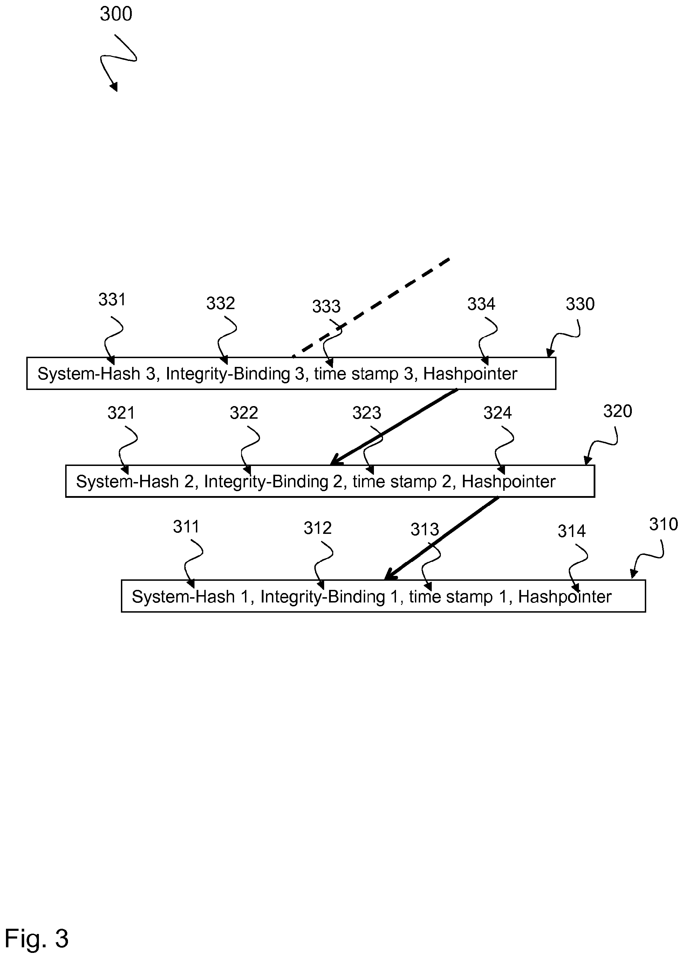

The value System-Hash and the "Integrity Binding" value or also "just" a hash value thereof "Hash[Integrity Binding]" can be stored in a distributed database 140, e.g. a blockchain 300 together with a time stamp, e.g. as illustrated in Fig. 3:

System-Hash x, Integrity-Binding x, timestamp 1, hash pointer;

or:

System-Hash x, Hash[Integrity-Binding x], timestamp 1, hash pointer.

The Edge computing device 110 may be configured to store the aggregated electronic fingerprint, $H_{SYSTEM}$, 331 of the communication assembly 100, the integrity binding value 332 and/or an electronic fingerprint, in particular a hash value, of the integrity binding value 332 together with a time stamp 333 in a database 140, e.g. a distributed database, e.g. a blockchain 300 as shown in Fig. 3.

The distributed database 140, 300 comprises several blocks 310, 320, 330 as exemplarily shown in Fig. 3, each block (e.g. block 330 shown in Fig. 3) containing an entry of an aggregated electronic fingerprint, $H_{SYSTEM}$, 331 of the communication assembly 100, an integrity binding value 332, a corresponding time stamp 333 and a hash pointer 334 to a previous block 320 containing a similar structure 321, 322, 323, 324.

The Edge computing device 110 may create the binding channel 122 dynamically between different Edge services 113, 115 of the Edge computing device 110 based on an indication from the communication device 120.

The Edge computing device 110 may be configured to release the binding channel 122 between the communication terminal 120 and the at least one Edge service 113, 115 based on a handover signal from a second Edge computing device, e.g. a second cloudlet 221 as shown in Fig. 2, indicating establishment of a second binding channel 204 between the communication terminal 120 and the second Edge computing device 221.

The binding channel 122 may comprises a radio channel established between a mobile communication terminal 120, in particular an IoT device, and an Edge computing device 110 located in a radio access network of the 5G network.

A network entity 130 for verifying an integrity of pre-processed data of the communication assembly 100 described above may be arranged in the core network 101. Alternatively, the network entity may be included or integrated in the edge processing device 110. The network entity 130 is configured to derive a first aggregated electronic fingerprint, $H_{SYSTEM}$, of the communication assembly 100 from a data base entry 330, e.g. a data base entry 330 of a distributed database 140 or of a blockchain 300 as described below with respect to Fig. 3. The network entity 130 is further configured to determine a second aggregated electronic fingerprint, $H_{SYSTEM}$, of the communication assembly 100 based on original data or based on an electronic fingerprint, $H_{DATA}$, of the original data and electronic certificates of the communication terminal 120, the Edge computing device 110 and the at least one Edge service 113, 115. The network entity 130 is configured to verify the integrity of the pre-processed data, the involved Edge computing device 110 and/or the involved at least one Edge service 113, 115 based on a comparison of the first aggregated electronic fingerprint with the second aggregated electronic fingerprint.

The network entity 130 thus provides verification of the data origin. That is, evidence is provided that the data stored in the database 140 or blockchain 300 was actually created by the combination of terminal device 120, edge computing device 110 (cloudlet), and processing edge service 113, 115. For such verification the network entity 140 may perform the following steps:

In a first step, the System-Hash $H_{System}$ and the value "Integrity-Binding" are read from the database 140 or blockchain 300. The properties of the blockchain 300 (or distributed database 140) ensure that these values are trusted and stored there at a specific time.

In a second step, the hash value is generated again from the present original data: $H_{Data} = \text{Hash}[\text{I/O-Data}]$. If the original data is no longer available, a new generation of the System-Hash from $H_{Data}$ is sufficient: $H_{System} = \text{Hash}[\text{Certificate}_{Endpoint}, \text{Certificate}_{Edge\text{-}Service}, \text{Certificate}_{Cloudlet}, H_{Data}]$.

In a third step the individual signatures can be compared with the public keys from the certificates, i.e.:

[ (H$_{System}$)signed by Endpoint] encoded by PubKey$_{Endpoint}$ = H$_{System}$

[ (H$_{System}$)signed by Edge-Service] encoded by PubKey$_{Edge-Service}$ = H$_{System}$

[ (H$_{System}$)signed by Cloudlet] encoded by PubKey$_{Cloudlet}$ = H$_{System}$

If the values are the same, it can be guaranteed that the data are I/O data from the combination of terminal 120, edge computing device 110 (Cloudlet) and edge service 113, 115 and have been processed at the time stored in the blockchain 300 (or distributed database 140).

Therefore, the network entity 130 is configured to derive the first aggregated electronic fingerprint, H$_{SYSTEM}$, of the communication assembly 100 from the blockchain 300 (or the distributed database 140). The network entity 130 may be configured to verify the pre-processed data based on a comparison of the first aggregated electronic fingerprint with the second aggregated electronic fingerprint signed by each of the communication terminal 120, the Edge computing device 110 and the at least one Edge service 113, 115 using their respective public key, e.g. according to the Example above.

Fig. 2 shows a schematic diagram illustrating an exemplary system 200 for providing integrity values according to the disclosure. The system 200 includes two communication assemblies 100, 220 according to the description above with respect to Fig. 1.

The first communication assembly 100 includes a communication terminal 120, also referred to as 5G Endpoint, an Edge computing device 110, also referred to as Cloudlet A and Edge services 113, 115 running on the Edge computing device 110 and a binding channel 112 for binding the communication terminal 120 to one (or more) of the Edge services 113, 115. The second communication assembly 220 includes the (same) communication terminal 120, an Edge computing device 221, also referred to as Cloudlet B and Edge services 222, 223 running on the Edge computing device 221 and a binding channel 204 for binding the communication terminal 120 to one (or more) of the Edge services 222, 223.

In a first exemplary configuration, the first communication assembly 100 is established before the second communication assembly 220, for example the 5G Endpoint is a mobile device and moves from the range of Cloudlet A into the range of Cloudlet B. For example both Cloudlets may be located in the same core network 101. Alternatively, Cloudlet A may be located in a first core network 101 and Cloudlet B may be located in a second core network (not shown in Fig. 1).

In a second exemplary configuration, the first communication assembly 100 is established together with the second communication assembly 220, for example the 5G Endpoint requires a lot of resources that cannot be provided by Cloudlet A alone. Then, the 5G Endpoint 120 requests Cloudlet B to establish the second binding channel 204 to additionally bind the resources and/or services of Cloudlet B for processing data provided by the 5G Endpoint.

As described above with respect to Fig. 1, the communication terminal 120 comprises an electronic identity 121, and each, the Edge computing devices 110, 221 and the at least one Edge service 113, 115, 222, 223 comprises an electronic identity 111, 114, 116. The binding of both binding channels 122, 204 is based on the electronic identities 121, 111, 114, 116 of the communication terminal 120, the Edge computing device 110, 221 and the at least one Edge service 113, 115, 222, 223.

Each Cloudlet (A, B) 110, 221 may determine an electronic identity 121, 111, 114, 116 of a specific device based on a cryptographic unique root-of-trust located in the specific device and to establish the binding channel 122, 204 based on the electronic identity of the specific device and corresponding electronic identities 121, 111, 114, 116 of the communication terminal 120, the respective Cloudlet (A, B) 110, 221 and the respective Edge services 113, 115, 222, 223. The cryptographic unique root-of-trust may be formed by a digital certificate 202, 216, 226, 214, 215, 224, 225. The specific device may be each of the communication terminal 120, the Edge computing device (or Cloudlet) 110, 221 and the Edge service 113, 115, 222, 223, i.e. a processing resource of the Edge computing device running the corresponding Edge service 113, 115, 222, 223.

Cloudlet A, 110 may create the binding channel 122 dynamically between different Edge services 113, 115 of the Edge computing device 110 based on an indication from the communication device 120. Similarly, Cloudlet B, 221 may create the binding channel 204 dynamically between different Edge services 222, 223 of the Cloudlet B 221 based on an indication from the communication device 120.

Cloudlet A 110, for example, may release the binding channel 122 between the communication terminal 120 and the at least one Edge service 113, 115 based on a handover signal from Cloudlet B 221 indicating establishment of the second binding channel 204 between the communication terminal 120 and Cloudlet B 221, in particular a service 222, 223 of Cloudlet B 221.

The binding channel 122 may comprises a radio channel (or a fixed line channel) established between the communication terminal 120, in particular an IoT device, and Cloudlet A 110 that may be located in a radio access network of the 5G network. Alternatively, binding channel 122 may comprise a radio channel and binding channel 204 may comprise a fixed line channel.

Fig. 3 shows a schematic diagram illustrating an exemplary storage of integrity values in a blockchain 300 according to the disclosure.

In the example of Fig. 3, the blockchain 300 has currently created three entries 310, 320, 330. Each entry including a System-Hash 311, an Integrity-Binding 312, a time stamp 313 and a hashpointer 314. The System-Hash 311 and the Integrity-Binding 312 may be determined by the following procedure:

Both the terminal device 120, the edge computing devices 110, 221 (i.e. Cloudlet A and B) and the processing edge services 113, 115, 222, 223 have an electronic identity 121, 111, 114, 116, e.g. via a certificate with a public key and a secured associated private key, e.g. a certificate 202, 216, 214, 215 as described above with respect to Figs. 1 and 2.

This electronic identity 121, 111, 114, 116 allows the units 120, 110,, 221, 113, 115, 222, 223 to be combined with the processed data at regular time intervals. This can be done through a hash value with signature on the processed data and identities, e.g. as described by the following example:

A)

$$H_{Data} = Hash[I/O\text{-}Data];$$

B)

$$System\text{-}Hash = H_{System} = Hash[Certifikate_{Endpoint}, Certificate_{Edge\text{-}Service},$$

$$Certificate_{Cloudlet}, H_{Data}];$$

C)

$$Integrity\text{-}Binding = (H_{System})signed\ by\ endpoint + (H_{System})signed\ by\ Edge\text{-}Service, (H_{System})signed\ by\ Cloudlet.$$

The value System-Hash and the "Integrity Binding" value or also "just" a hash value thereof "Hash[Integrity Binding]" can be stored in the blockchain 300 together with the corresponding time stamp 313, 323, 333, as illustrated in Fig. 3:

System-Hash x, Integrity-Binding x, timestamp 1, hash pointer;
or:
System-Hash x, Hash[Integrity-Binding x], timestamp 1, hash pointer.

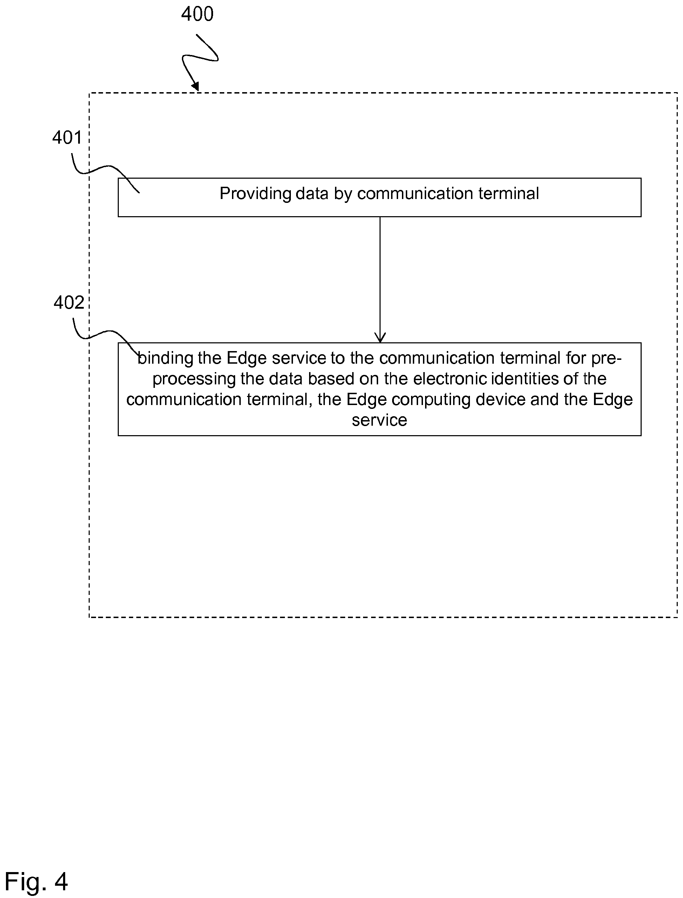

Fig. 4 shows a schematic diagram illustrating a method 400 for pre-processing data by a communication assembly according to the disclosure. The method 400 can be used for pre-processing data by a communication assembly, e.g. a communication assembly 100 as described above with respect to Figs. 1 and 2 comprising a communication terminal 120, an Edge computing device 110 running at least one Edge service 113, 115 and a binding channel 122 between the communication terminal 120 and the at least one Edge service 113, 115. Each of the communication terminal 120, the Edge computing device 110 and the at least one Edge service 113, 115 comprises an electronic identity 121, 111, 114, 116 as described above with respect to Fig. 1.

The method 400 comprises: providing 401 data by the communication terminal 120. The method 400 further comprises: binding 402 the at least one Edge service 113, 115 at least temporarily to the communication terminal 120, by the binding channel 122, for pre-processing the data provided by the communication terminal 120, wherein the binding is based on the electronic identities 121, 111, 114, 116 of the communication terminal 120, the Edge computing device 110 and the at least one Edge service 113, 115, e.g. as described above with respect to Figs. 1 and 2.

Another aspect of the invention is related to a computer program product comprising program code for performing the methods and procedures or the functionalities described above, when executed on a computer or a processor. The method may be implemented as program code that may be stored on a non-transitory computer medium. The computer program product may implement the techniques described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

**Claims**

1. A communication assembly (100) for pre-processing data before transmission to a core or communication network (101), in particular a 5G core network, the communication assembly (100), comprising:

   a communication terminal (120), in particular an Internet-of-Things, IoT, terminal for providing data, the communication terminal (120) comprising an electronic identity (121);
   an Edge computing device (110) providing network-related processing resources at an edge of the core network (101), the Edge computing device (110) running at least one Edge service (113, 115) configured to pre-process data on the network-related processing resources, wherein each, the Edge computing device (110) and the at least one Edge service (113, 115) comprises an electronic identity (111, 114, 116); and
   a binding channel (122) between the communication terminal (120) and the at least one Edge service (113, 115), configured to bind the at least one Edge service (113, 115) at least temporarily to the communication terminal (120) for pre-processing the data provided by the communication terminal (120),
   wherein the binding is based on the electronic identities (121, 111, 114, 116) of the communication terminal (120), the Edge computing device (110) and the at least one Edge service (113, 115), wherein the Edge computing device (110) is configured to release the binding channel (122) between the communication terminal (120) and the at least one Edge service (113, 115) based on a handover signal from a second Edge computing device indicating establishment of a second binding channel between the communication terminal (120) and the second Edge computing device.

2. The communication assembly (100) of claim 1,
   wherein the Edge computing device (110) is configured to determine an electronic identity (121, 111, 114, 116) of a specific device based on a cryptographic unique root-of-trust (202, 216, 214, 215) located in the specific device and to establish the binding channel (122) based on the electronic identity of the specific device and corresponding electronic identities (121, 111, 114, 116) of the communication terminal (120), the Edge computing device (110) and at least one Edge service (113, 115).

3. The communication assembly (100) of claim 2,
   wherein the cryptographic unique root-of-trust (202, 216, 214, 215) of the Edge computing device (110), the Edge service (113, 115) and the communication terminal (120) is for each component an electronic fingerprint, $H_{DATA}$, in particular a hash value, of unique data and code located on the specific device.

4. The communication assembly (100) of claim 2 or 3,
   wherein the cryptographic unique root-of-trust (202, 216, 214, 215) of the Edge computing device (110), the at least one Edge service (113, 115) and the communication terminal (110) is formed by an electronic certificate (228) comprising a public key and a corresponding secure private key.

5. The communication assembly (100) of claim 3,
   wherein the Edge computing device (110), the at least one Edge service (113, 115) and/or the communication terminal (110) is configured to determine the electronic fingerprint, $H_{DATA}$, of the data in regular time intervals and to establish the binding channel (122) for a respective time interval.

6. The communication assembly (100) of claim 3,
   wherein the Edge computing device (110) is configured to determine an aggregated electronic fingerprint, $H_{SYSTEM}$,

which comprises electronic fingerprints, HDATA , of one or more Edge services (113, 115) executed on the Edge computing device (110).

7. The communication assembly (100) of claim 6,
   wherein the Edge computing device (110) is configured to provide an integrity binding value based on signatures of the aggregated electronic fingerprint, $H_{SYSTEM}$ , of the communication assembly (100) created by the communication terminal (120), the Edge computing device (110) and the at least one Edge service (113, 115).

8. The communication assembly (100) of claim 7,
   wherein the Edge computing device (110) is configured to store the aggregated electronic fingerprint, $H_{SYSTEM}$ , (331) of the communication assembly (100), the integrity binding value (332) and/or an electronic fingerprint, in particular a hash value, of the integrity binding value (332) together with a time stamp (333) in a database (140), in particular a distributed database, in particular a blockchain (300).

9. The communication assembly (100) of claim 8,
   wherein the distributed database (140, 300) comprises several blocks (310, 320, 330), each (330) containing an entry of an aggregated electronic fingerprint, $H_{SYSTEM}$ , (331) of the communication assembly (100), an integrity binding value (332), a corresponding time stamp (333) and a hash pointer (334) to a previous block (320) containing a similar structure (321, 322, 323, 324).

10. The communication assembly (100) of one of the preceding claims,
    wherein the Edge computing device (110) is configured to create the binding channel (122) dynamically between different Edge services (113, 115) of the Edge computing device (110) based on an indication from the communication device (120).

11. The communication assembly (100) of one of the preceding claims,
    wherein the binding channel (122) comprises a radio channel established between a mobile communication terminal (120), in particular an IoT device, and an Edge computing device (110) located in a radio access network of the 5G network.

12. A method (400) for pre-processing data before transmission to a core or communication network, in particular a 5G core network, by a communication assembly (100) comprising a communication terminal (120), in particular an Internet-of-Things, IoT, terminal for providing data, an Edge computing device (110) providing network-related processing resources at an edge of the core network and running at least one Edge service (113, 115), wherein the at least one Edge service (113, 115) is configured to pre-process data on the network-related processing resources, wherein the Edge computing device (110) and the at least one Edge service (113, 115) comprises an electronic identity (111, 114, 116), and a binding channel (122) between the communication terminal (120) and the at least one Edge service (113, 115), wherein each of the communication terminal (120), the Edge computing device (110) and the at least one Edge service (113, 115) comprises an electronic identity (121, 111, 114, 116), the method (400) comprising:

    providing (401) data by the communication terminal (120); and
    binding (402) the at least one Edge service (113, 115) at least temporarily to the communication terminal (120), by the binding channel (122), for pre-processing the data provided by the communication terminal (120),
    wherein the binding is based on the electronic identities (121, 111, 114, 116) of the communication terminal (120), the Edge computing device (110) and the at least one Edge service (113, 115), wherein the Edge computing device (110) releases the binding channel (122) between the communication terminal (120) and the at least one Edge service (113, 115) based on a handover signal from a second Edge computing device indicating establishment of a second binding channel between the communication terminal (120) and the second Edge computing device.

**Patentansprüche**

1. Kommunikationsanordnung (100) zur Vorverarbeitung von Daten vor der Übertragung an ein Kern- oder Kommunikationsnetz (101), insbesondere ein 5G-Kernnetz, wobei die Kommunikationsanordnung (100) umfasst:

    ein Kommunikationsendgerät (120), insbesondere ein Internet-of-Things-Endgerät, IoT-Endgerät, zum Bereit-

stellen von Daten, wobei das Kommunikationsendgerät (120) eine elektronische Identität (121) umfasst;

ein Edge-Computing-Gerät (110), die netzwerkbezogene Verarbeitungsressourcen an einem Rand des Kernnetzes (101) bereitstellt, wobei das Edge-Computing-Gerät (110) mindestens einen Edge-Dienst (113, 115) ausführt, der so konfiguriert ist, dass er Daten auf den netzwerkbezogenen Verarbeitungsressourcen vorverarbeitet, wobei sowohl das Edge-Computing-Gerät (110) als auch der mindestens eine Edge-Dienst (113, 115) eine elektronische Identität (111, 114, 116) umfassen; und

einen Bindungskanal (122) zwischen dem Kommunikationsendgerät (120) und dem mindestens einen Edge-Dienst (113, 115), der so konfiguriert ist, dass er den mindestens einen Edge-Dienst (113, 115) zumindest vorübergehend an das Kommunikationsendgerät (120) bindet, um die vom Kommunikationsendgerät (120) bereitgestellten Daten vorzuverarbeiten,

wobei die Bindung auf den elektronischen Identitäten (121, 111, 114, 116) des Kommunikationsendgeräts (120), des Edge-Computing-Gerätes (110) und des mindestens einen Edge-Dienstes (113, 115) basiert, wobei das Edge-Computing-Gerät (110) so konfiguriert ist, dass es den Bindungskanal (122) zwischen dem Kommunikationsendgerät (120) und dem mindestens einen Edge-Dienst (113, 115) auf der Grundlage eines Handover-Signals von einem zweiten Edge-Computing-Gerät freigibt, das den Aufbau eines zweiten Bindungskanals zwischen dem Kommunikationsendgerät (120) und dem zweiten Edge-Computing-Gerät anzeigt.

2. Die Kommunikationsanordnung (100) nach Anspruch 1,
wobei das Edge-Computing-Gerät (110) so konfiguriert ist, dass es eine elektronische Identität (121, 111, 114, 116) eines spezifischen Geräts auf der Grundlage einer kryptografischen eindeutigen Vertrauensbasis (202, 216, 214, 215), die sich in dem spezifischen Gerät befindet, bestimmt und den Bindungskanal (122) auf der Grundlage der elektronischen Identität des spezifischen Geräts und entsprechender elektronischer Identitäten (121, 111, 114, 116) des Kommunikationsendgeräts (120), des Edge-Computing-Geräts (110) und mindestens eines Edge-Dienstes (113, 115) einzurichten.

3. Die Kommunikationsanordnung (100) nach Anspruch 2,
wobei die kryptografische eindeutige Vertrauensbasis (202, 216, 214, 215) des Edge-Computing-Geräts (110), des Edge-Dienstes (113, 115) und des Kommunikationsendgeräts (120) für jede Komponente ein elektronischer Fingerabdruck, $H_{DATA}$, insbesondere ein Hashwert, aus eindeutigen Daten und Code, die sich auf dem jeweiligen Gerät befinden, ist.

4. Die Kommunikationsanordnung (100) nach Anspruch 2 oder 3,
wobei die kryptografische eindeutige Vertrauensbasis (202, 216, 214, 215) des Edge-Computing-Geräts (110), des mindestens einen Edge-Dienstes (113, 115) und des Kommunikationsendgeräts (110) durch ein elektronisches Zertifikat (228) gebildet wird, das einen öffentlichen Schlüssel und einen entsprechenden sicheren privaten Schlüssel umfasst.

5. Die Kommunikationsanordnung (100) nach Anspruch 3,
wobei das Edge-Computing-Gerät (110), der mindestens eine Edge-Dienst (113, 115) und/oder das Kommunikationsendgerät (110) so konfiguriert ist, dass sie den elektronischen Fingerabdruck $H_{DATA}$ der Daten in regelmäßigen Zeitintervallen ermittelt und den Bindungskanal (122) für ein jeweiliges Zeitintervall einrichtet.

6. Die Kommunikationsanordnung (100) nach Anspruch 3,
wobei das Edge-Computing-Gerät (110) so konfiguriert ist, dass es einen aggregierten elektronischen Fingerabdruck $H_{system}$ ermittelt, der elektronische Fingerabdrücke HDATA eines oder mehrerer Edge-Dienste (113, 115) umfasst, die auf dem Edge-Computing-Gerät (110) ausgeführt werden.

7. Die Kommunikationsanordnung (100) nach Anspruch 6,
wobei das Edge-Computing-Gerät (110) so konfiguriert ist, dass es einen Integritätsbindungswert auf der Grundlage von Signaturen des aggregierten elektronischen Fingerabdrucks $H_{system}$ des Kommunikationsanordnung (100) bereitstellt, der vom Kommunikationsendgerät (120), dem Edge-Computing-Gerät (110) und dem mindestens einen Edge-Dienst (113, 115) erstellt wird.

8. Die Kommunikationsanordnung (100) nach Anspruch 7,
wobei das Edge-Computing-Gerät (110) so konfiguriert ist, dass es den aggregierten elektronischen Fingerabdruck $H_{system}$, (331) der Kommunikationsanordnung (100), den Integritätsbindungswert (332) und/oder einen elektronischen Fingerabdruck, insbesondere einen Hashwert, des Integritätsbindungswerts (332) zusammen mit einem Zeitstempel (333) in einer Datenbank (140), insbesondere einer verteilten Datenbank, insbesondere einer Blockchain (300), speichert.

9. Die Kommunikationsanordnung (100) nach Anspruch 8,
wobei die verteilte Datenbank (140, 300) mehrere Blöcke (310, 320, 330) umfasst, von denen jeder (330) einen Eintrag eines aggregierten elektronischen Fingerabdrucks $H_{system,}$ (331) der Kommunikationsanordnung (100), einen Integritätsbindungswert (332), einen entsprechenden Zeitstempel (333) und einen Hash-Zeiger (334) auf einen vorhergehenden Block (320), der eine ähnliche Struktur (321, 322, 323, 324) enthält.

10. Die Kommunikationsanordnung (100) nach einem der vorstehenden Ansprüche,
wobei das Edge-Computing-Gerät (110) so konfiguriert ist, dass es den Bindungskanal (122) dynamisch zwischen verschiedenen Edge-Diensten (113, 115) des Edge-Computing-Geräts (110) auf der Grundlage einer Angabe des Kommunikationsgeräts (120) erstellt.

11. Die Kommunikationsanordnung (100) nach einem der vorstehenden Ansprüche,
wobei der Bindungskanal (122) einen Funkkanal umfasst, der zwischen einem mobilen Kommunikationsendgerät (120), insbesondere einem IoT-Gerät, und einem Edge-Computing-Gerät (110), das sich in einem Funkzugangsnetz des 5G-Netzes befindet.

12. Verfahren (400) zur Vorverarbeitung von Daten vor der Übertragung an ein Kern- oder Kommunikationsnetz, insbesondere ein 5G-Kernnetz, durch eine Kommunikationsanordnung (100), die ein Kommunikationsendgerät (120), insbesondere ein Internet-of-Things-Endgerät, IoT-Endgerät, zur Bereitstellung von Daten, ein Edge-Computing-Gerät (110), das netzwerkbezogene Verarbeitungsressourcen an einem Rand des Kernnetzes bereitstellt und mindestens einen Edge-Dienst (113, 115) ausführt, wobei der mindestens eine Edge-Dienst (113, 115) so konfiguriert ist, dass er Daten auf den netzwerkbezogenen Verarbeitungsressourcen vorverarbeitet, wobei das Edge-Computing-Gerät (110) und der mindestens eine Edge-Dienst (113, 115) eine elektronische Identität (111, 114, 116) sowie einen Bindungskanal (122) zwischen dem Kommunikationsendgerät (120) und dem mindestens einen Edge-Dienst (113, 115) umfassen, wobei jedes der Kommunikationsendgeräte (120), das Edge-Computing-Gerät (110) und der mindestens eine Edge-Dienst (113, 115) eine elektronische Identität (121, 111, 114, 116) umfasst, wobei das Verfahren (400) umfasst:

Bereitstellen (401) von Daten durch das Kommunikationsendgerät (120); und
das zumindest vorübergehende Binden (402) des mindestens einen Edge-Dienstes (113, 115) an das Kommunikationsendgerät (120) über den Bindungskanal (122) zur Vorverarbeitung der vom Kommunikationsendgerät (120) bereitgestellten Daten,
wobei die Bindung auf den elektronischen Identitäten (121, 111, 114, 116) des Kommunikationsendgeräts (120), des Edge-Computing-Geräts (110) und des mindestens einen Edge-Dienstes (113, 115) basiert, wobei das Edge-Computing-Gerät (110) den Bindungskanal (122) zwischen dem Kommunikationsendgerät (120) und dem mindestens einen Edge-Dienst (113, 115) auf der Grundlage eines Handover-Signals von einem zweiten Edge-Computing-Gerät freigibt, das den Aufbau eines zweiten Bindungskanals zwischen dem Kommunikationsendgerät (120) und der zweiten Edge-Computing-Gerät anzeigt.

## Revendications

1. Ensemble de communication (100) pour le pré-traitement de données avant la transmission à un réseau central ou de communication (101), en particulier un réseau central 5G, l'ensemble de communication (100) comprenant :

un terminal de communication (120), en particulier un terminal de l'Internet des objets, IdO, pour fournir des données, le terminal de communication (120) comprenant une identité électronique (121) ;
un dispositif informatique périphérique (110) fournissant des ressources de traitement liées au réseau en périphérie du réseau central (101), le dispositif informatique périphérique (110) exécutant au moins un service périphérique (113, 115) configuré pour pré-traiter des données sur les ressources de traitement liées au réseau, chacun du dispositif informatique périphérique (110) et du ou des services périphériques (113, 115) comprenant une identité électronique (111, 114, 116) ; et
un canal de liaison (122) entre le terminal de communication (120) et le ou les services périphériques (113, 115), configuré pour lier le ou les services périphériques (113, 115) au moins temporairement au terminal de communication (120) pour un pré-traitement des données fournies par le terminal de communication (120), dans lequel la liaison est basée sur les identités électroniques (121, 111, 114, 116) du terminal de communication (120), du dispositif informatique périphérique (110) et du ou des services périphériques (113, 115), le dispositif informatique périphérique (110) étant configuré pour libérer le canal de liaison (122) entre le terminal de communication (120) et le ou les services périphériques (113, 115) sur la base d'un signal de transfert provenant d'un second dispositif informatique périphérique indiquant l'établissement d'un second canal de liaison entre le terminal de communication (120) et le second dispositif informatique périphérique.

2. Ensemble de communication (100) selon la revendication 1,
dans lequel le dispositif informatique périphérique (110) est configuré pour déterminer une identité électronique (121, 111, 114, 116) d'un dispositif spécifique sur la base d'une racine de confiance unique cryptographique (202, 216, 214, 215) située dans le dispositif spécifique et pour établir le canal de liaison (122) sur la base de l'identité électronique du dispositif spécifique et des identités électroniques correspondantes (121, 111, 114, 116) du terminal de communication (120), du dispositif informatique périphérique (110) et d'au moins un service périphérique (113, 115).

3. Ensemble de communication (100) selon la revendication 2,
dans lequel la racine de confiance unique cryptographique (202, 216, 214, 215) du dispositif informatique périphérique (110), du service périphérique (113, 115) et du terminal de communication (120) est pour chaque composant une empreinte électronique, $H_{DATA}$, en particulier une valeur de hachage, de données et de code uniques situés sur le dispositif spécifique.

4. Ensemble de communication (100) selon la revendication 2 ou 3,
dans lequel la racine de confiance unique cryptographique (202, 216, 214, 215) du dispositif informatique périphérique (110), du ou des services périphériques (113, 115) et du terminal de communication (110) est formée par un certificat électronique (228) comprenant une clé publique et une clé privée sécurisée correspondante.

5. Ensemble de communication (100) selon la revendication 3,
dans lequel le dispositif informatique périphérique (110), le ou les services périphériques (113, 115) et/ou le terminal de communication (110) sont configurés pour déterminer l'empreinte électronique, $H_{DATA}$, des données à intervalles de temps réguliers et pour établir le canal de liaison (122) pour un intervalle de temps respectif.

6. Ensemble de communication (100) selon la revendication 3,
dans lequel le dispositif informatique périphérique (110) est configuré pour déterminer une empreinte électronique agrégée, $H_{SYSTEM}$, qui comprend des empreintes électroniques, HDATA, d'un ou plusieurs services périphériques (113, 115) exécutés sur le dispositif informatique périphérique (110).

7. Ensemble de communication (100) selon la revendication 6,
dans lequel le dispositif informatique périphérique (110) est configuré pour fournir une valeur de liaison d'intégrité sur la base de signatures de l'empreinte électronique agrégée, $H_{SYSTEM}$, de l'ensemble de communication (100) constitué par le terminal de communication (120), le dispositif informatique périphérique (110) et le ou les services périphériques (113, 115).

8. Ensemble de communication (100) selon la revendication 7,
dans lequel le dispositif informatique périphérique (110) est configuré pour stocker l'empreinte électronique agrégée, $H_{SYSTEM}$, (331) de l'ensemble de communication (100), la valeur de liaison d'intégrité (332) et/ou une empreinte électronique, en particulier une valeur de hachage, de la valeur de liaison d'intégrité (332) ainsi qu'une estampille temporelle (333) dans une base de données (140), en particulier une base de données distribuée, en particulier une chaîne de blocs (300).

9. Ensemble de communication (100) selon la revendication 8,
dans lequel la base de données distribuée (140, 300) comprend plusieurs blocs (310, 320, 330), chacun (330) contenant une entrée d'une empreinte électronique agrégée, $H_{SYSTEM}$, (331) de l'ensemble de communication (100), une valeur de liaison d'intégrité (332), une estampille temporelle (333) correspondante et un pointeur de hachage (334) sur un bloc précédent (320) contenant une structure similaire (321, 322, 323, 324).

10. Ensemble de communication (100) selon l'une des revendications précédentes,
dans lequel le dispositif informatique périphérique (110) est configuré pour créer le canal de liaison (122) de manière dynamique entre différents services périphériques (113, 115) du dispositif informatique périphérique (110) sur la base d'une indication provenant du dispositif de communication (120).

**11.** Ensemble de communication (100) selon l'une des revendications précédentes,
dans lequel le canal de liaison (122) comprend un canal radio établi entre un terminal mobile de communication (120), en particulier un dispositif IdO, et un dispositif informatique périphérique (110) situé dans un réseau d'accès radio du réseau 5G.

**12.** Procédé (400) de pré-traitement de données avant transmission à un réseau central ou de communication, en particulier un réseau central 5G, par un ensemble de communication (100) comprenant un terminal de communication (120), en particulier un terminal de l'Internet des objets, IdO, pour fournir des données, un dispositif informatique périphérique (110) fournissant des ressources de traitement liées au réseau en périphérie du réseau central et exécutant au moins un service périphérique (113, 115), dans lequel le service périphérique (113, 115) est configuré pour pré-traiter des données sur les ressources de traitement liées au réseau, le dispositif informatique périphérique (110) et le ou les services périphériques (113, 115) comprenant une identité électronique (111, 114, 116), et un canal de liaison (122) entre le terminal de communication (120) et le ou les services périphériques (113, 115), dans lequel chacun du terminal de communication (120), du dispositif informatique périphérique (110) et du ou des services périphériques (113, 115) comprend une identité électronique (121, 111, 114, 116), le procédé (400) comprenant :

la fourniture (401) de données par le terminal de communication (120) ; et
la liaison (402) du ou des services périphériques (113, 115) au moins temporairement au terminal de communication (120), par le canal de liaison (122), pour pré-traiter les données fournies par le terminal de communication (120),
dans lequel la liaison est basée sur les identités électroniques (121, 111, 114, 116) du terminal de communication (120), du dispositif informatique périphérique (110) et du ou des services périphériques (113, 115), le dispositif informatique périphérique (110) libérant le canal de liaison (122) entre le terminal de communication (120) et le ou les services périphériques (113, 115) sur la base d'un signal de transfert provenant d'un second dispositif informatique périphérique indiquant l'établissement d'un second canal de liaison entre le terminal de communication (120) et le second dispositif informatique périphérique.

100

101

Core network

DB

140

NW
Entity

130

114 116

110

EDGE

ID

111

EDGE
service

ID

EDGE
service

ID

..

113

115

Binding channel

122

121

ID

120

Fig. 1

Fig. 2

300

331        332        333                334        330

| System-Hash 3, Integrity-Binding 3, time stamp 3, Hashpointer |
|---|

321        322        323                324        320

| System-Hash 2, Integrity-Binding 2, time stamp 2, Hashpointer |
|---|

311        312        313                314        310

| System-Hash 1, Integrity-Binding 1, time stamp 1, Hashpointer |
|---|

Fig. 3

400

401

Providing data by communication terminal

402

binding the Edge service to the communication terminal for pre-processing the data based on the electronic identities of the communication terminal, the Edge computing device and the Edge service

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KETAN BHARDWAJ**. *Information-centric networking with edge computing for IoT: Research challenges and future directions*

- **ULLAH REHMAT**. *EdgeChain: An Edge-IoT Framework and Prototype Based on Blockchain and Smart Contracts*